# DEMANDE DE BREVET EUROPEEN

(11) **EP 4 410 638 A1**
(43) Date de publication de la demande: **07.08.2024**
(21) Numéro de dépôt: 24154422.0
(22) Date de dépôt: 29.01.2024
(51) Int. Cl.: B62D 25/10, B62D 25/12, B60J 5/04, B60J 5/10

(54) **DOUBLURE DE CAPOT AVANT DE VÉHICULE AUTOMOBILE ANTI COINCEMENT ET PROCÉDÉ DE FABRICATION**

(30) Priorité: 03.02.2023 FR 2301020
(71) Demandeur: Stellantis Auto SAS, 78300 Poissy (FR)
(72) Inventeur: BOUDAN, JULIEN, 91210 DRAVEIL (FR); ROYER, GUILLAUME, 91680 BRUYERES LE CHATEL (FR); PERON, RODOLPHE, 95220 HERBLAY (FR); GOURVENNEC, THIBAULT, 91210 DRAVEIL (FR)

(57) **Abrégé**

L'invention a également pour objet une doublure de renfort (26) d'ouvrant de véhicule automobile, ladite doublure comprenant une tôle emboutie (32) avec une épaisseur (48), une première surface (40) et une deuxième surface (50) opposée à la première surface suivant l'épaisseur, la deuxième surface étant destinée à recevoir une peau extérieure d'ouvrant. La tôle emboutie comprend une patte de butée droite (42) s'étendant perpendiculairement à la première surface afin de maintenir à distance une doublure d'ouvrant identique empilée dessus. L'invention a également pour objet un procédé de fabrication de doublure de renfort et un véhicule automobile.

## Description

La présente invention revendique la priorité de la demande française 2301020 déposée le 3 février 2023, dont le contenu (texte, dessins et revendications) est ici incorporé par référence.

L'invention se rapporte au domaine des ouvrants de véhicule automobile. Plus précisément, l'invention concerne les doublures de renfort d'ouvrant de véhicule automobile. En particulier, l'invention concerne la manutention et le stockage des doublures de renfort d'ouvrant de véhicule automobile. L'invention a pour objet une doublure de renfort d'ouvrant de véhicule automobile. L'invention a également pour objet un ouvrant de véhicule automobile. L'invention a également pour objet un véhicule automobile. L'invention a également pour objet un procédé de fabrication d'une doublure d'ouvrant de véhicule automobile.

Un véhicule automobile comprend plusieurs ouvrants montés pivotant par rapport à la caisse. Ces ouvrants comportent généralement une peau extérieure et une doublure de renfort permettant de rigidifier la peau extérieure lorsqu'elles sont soudées l'une à l'autre, c'est-à-dire dès le ferrage.

La doublure est généralement formée d'une tôle emboutie avec un contour similaire à celui de la peau extérieure. En son coeur, la tôle emboutie présente des profilés et des ajours. Ainsi, la tôle emboutie montre des surfaces concaves et des surfaces convexes suivant les faces. Elle comprend encore des moyens de fixation pour des organes tels des liaisons pivot ou des éléments de serrure.

Le document FR3109356A1 décrit un véhicule automobile comprenant un ouvrant, tel un capot moteur. L'ouvrant avant présente une paroi extérieure avec deux bords latéraux opposés ; et une doublure fixée contre une face intérieure de la paroi extérieure. Le capot comprenant, en outre : un support d'extension latérale adjacent à chacun des deux bords latéraux opposés de la paroi extérieure ; et un enjoliveur fixé sur chacun des deux supports d'extension latérale. Ce capot permet d'augmenter latéralement la taille du capot tout en respectant les contraintes d'emboutissage.

L'industrie automobile repose sur une rationalisation de chacune de ses étapes dans un contexte de production à grande échelle. De manière courante, les véhicules sont produits à plusieurs dizaines de millier d'exemplaires. Afin de faciliter leur transport, les tôles embouties sont empilées les unes sur les autres afin de former un ensemble compact, facilitant leur manutention.

Or, pendant leurs phases de transport, les tôles embouties sont susceptibles de s'emboiter l'une dans l'autre au sein de leur empilement. En effet, les surfaces concaves s'encastrent dans les surfaces convexes, ce qui coince les tôles embouties. Un bras robotisé ou un opérateur rencontre alors des difficultés à extraire les tôles embouties de leur empilement de transport. Des efforts supplémentaires sont nécessaires pour les récupérer. Il existe donc un besoin de faciliter la manutention d'un empilement de doublures d'ouvrant.

L'invention a pour objectif de répondre à au moins un des problèmes ou inconvénients rencontrés dans l'art antérieur. En particulier, l'invention a pour objectif de faciliter la manutention d'une doublure d'ouvrant de véhicule automobile. L'invention a également pour objectif de réduire le risque de coincement de doublure d'ouvrant empilées tout en optimisant la masse.

Selon un premier aspect, l'invention propose une doublure de renfort d'ouvrant de véhicule automobile, ladite doublure de renfort comprenant une tôle emboutie avec une épaisseur, une première surface et une deuxième surface opposée à la première surface suivant l'épaisseur, la deuxième surface étant destinée à recevoir une peau extérieure d'ouvrant ; remarquable en ce que la tôle emboutie comprend une patte de butée droite s'étendant perpendiculairement à la première surface afin de maintenir à distance une doublure d'ouvrant identique empilée contre sa première surface.

Dans une configuration empilée, les pattes de butée droites repoussent les doublures de renfort les unes des autres. Ainsi, le positionnement des doublures de renfort reste maîtrisé malgré la charge qui augmente vers le bas de l'empilement vertical. La problématique de coincement entre les doublures de renfort est maîtrisée malgré leur géométrie complexe.

Préférentiellement, la patte de butée droite comprend un bossage de rigidification.

Préférentiellement le bossage de rigidification s'étend au moins sur 50% de la patte de butée droite.

Préférentiellement, la patte de butée droite comprend un bord libre à l'opposé de la première surface, le bossage de rigidification étant audit bord libre.

Préférentiellement, la tôle emboutie comprend une ouverture avec un bord de jonction, la patte de butée droite s'étendant depuis le bord de jonction.

Préférentiellement, la patte de butée droite comprend une longueur développée mesurée depuis le bord de jonction, et l'ouverture comprend une deuxième longueur mesurée depuis le bord de jonction, la longueur développée représentant entre 50% et 100 % de la deuxième longueur.

Préférentiellement, la longueur développée représente de 80% à 95% de la deuxième longueur.

Préférentiellement, la patte de butée droite comprend une portion droite et une portion coudée reliant la portion droite à la première surface.

Préférentiellement, la doublure de renfort d'ouvrant présente une symétrie suivant un plan central.

Préférentiellement, la patte de butée droite présente une distance d'écartement par rapport à la première surface d'au moins 10 mm.

Préférentiellement, la patte de butée droite présente une distance d'écartement par rapport à la première surface d'au moins d'au moins 15 mm.

Préférentiellement, la patte de butée droite comprend une largeur d'au moins 10 mm.

Préférentiellement, la tôle emboutie comprend une portion périmétrique, la patte de butée droite est une première patte, la tôle emboutie comprenant au moins une, plus préférentiellement au moins trois autres pattes de butée droites et identiques à la première patte et réparties sur la portion périmétrique de la tôle emboutie.

Préférentiellement, la patte de butée droite forme une équerre.

Préférentiellement, la patte de jonction comprend deux bords latéraux droits et s'étendant perpendiculairement à la première surface.

Préférentiellement, la patte de butée comprend une portion rectiligne généralement perpendiculaire à la première surface et/ou à un plan principal.

Préférentiellement, la tôle emboutie comprend un rebord, la patte de butée droite étant à au plus 10 cm dudit rebord.

Préférentiellement, la patte de butée droite est à au plus 5 cm dudit rebord.

Préférentiellement, la patte de butée comprend une largeur d'au moins 15 mm.

Préférentiellement, le bossage de rigidification s'étend au moins sur 50% de la longueur de la patte de butée.

Préférentiellement, le bossage de rigidification est une nervure de rigidification.

Selon un autre aspect, l'invention propose une doublure de renfort d'ouvrant avant ou arrière de véhicule automobile, ladite doublure de renfort comprenant un panneau monobloc avec une face inférieure et une face supérieure destinée à recevoir une peau extérieure d'ouvrant ; remarquable en ce que le panneau monobloc comprend une patte de butée faisant saille sous la face inférieure.

Selon un autre aspect, l'invention propose une doublure de renfort d'ouvrant de véhicule automobile, ladite doublure de renfort comprenant une tôle emboutie avec un plan général, une première surface et une deuxième surface destinée à recevoir une peau extérieure d'ouvrant; remarquable en ce que la tôle emboutie comprend des moyens de butée faisant saillie depuis la première surface, la tôle emboutie étant configurée de sorte à ce que les moyens de butée soient en butée contre une deuxième surface d'une tôle emboutie d'une doublure d'ouvrant identique lors de leur empilement en mettant en correspondance leurs moyens de butée ; préférentiellement, les moyens de butée sont configurés de sorte à venir en butée l'un contre l'autre.

Selon un autre aspect, l'invention propose une doublure de renfort d'ouvrant de véhicule automobile, ladite doublure de renfort comprenant une tôle emboutie avec un plan général, une surface inférieure et un surface supérieure destinée à recevoir une peau extérieure d'ouvrant; remarquable en ce que la tôle emboutie comprend une patte de butée droite comprenant une portion verticale perpendiculaire au plan général ; et/ou la patte de butée droite comprend une portion de jonction et un bord libre opposé à la portion de jonction, la doublure de renfort étant configurée de sorte à ce que le bord libre soit en butée contre une portion de jonction d'une doublure d'ouvrant identique lorsque lesdites doublures de renfort sont empilées avec mise en correspondance des pattes de butée.

Selon un autre aspect, l'invention propose un ouvrant de véhicule automobile, ledit ouvrant comprenant une doublure de renfort et une peau extérieure fixée à la doublure de renfort, remarquable en ce que la doublure de renfort est conforme à l'invention.

Préférentiellement, l'ouvrant comprend des liaisons pivot à axe de pivotement horizontal.

Selon un autre aspect, l'invention propose un véhicule automobile comprenant un ouvrant avec une doublure de renfort et une peau extérieure supportée par la doublure de renfort, remarquable en ce que la doublure de renfort est conforme à l'invention.

Préférentiellement, l'ouvrant est un capot avant.

Selon un autre aspect, l'invention propose un procédé de fabrication d'une doublure de renfort d'ouvrant de véhicule automobile, le procédé comprenant les étapes suivantes : fourniture d'un flan de tôle ; emboutissage du flan de tôle de sorte à former une ébauche de doublure de renfort ; remarquable en ce que le procédé comprend les étapes suivantes : découpe d'une languette droite dans l'ébauche de doublure de renfort ; puis formation d'un bossage de rigidification dans la languette droite ; puis pliage de la languette droite d'un quart de tour de sorte à former une patte de butée droite.

Préférentiellement, la doublure de renfort est conforme à l'invention.

Selon un autre aspect, l'invention propose un procédé de fabrication de doublure de renfort d'ouvrant de véhicule automobile, remarquable en ce que le procédé comprend les étapes suivantes : fourniture d'un flan de tôle ; emboutissage du flan de tôle de sorte à former une ébauche de doublure de renfort ; découpe d'une la languette droite dans l'ébauche ; puis pliage de la languette droite d'un quart de tour de sorte à former une patte de butée droite.

Chaque caractéristique introduite par l'expression « préférentiellement » donnée en relation avec l'un des aspects de l'invention s'applique à tous les autres aspects de l'invention.

L'invention sera bien comprise et d'autres aspects et avantages apparaîtront clairement à la lecture de la description qui suit, donnée en référence aux figures annexées et énumérées ci-dessous.
La figure 1 est une vue de profil d'un véhicule automobile selon l'invention.
La figure 2 montre une vue en plan d'une doublure d'ouvrant de véhicule automobile selon l'invention.
La figure 3 représente une vue dans l'espace d'une patte de butée droite de doublure d'ouvrant de véhicule automobile selon l'invention.
La figure 4 représente une coupe d'un empilement de doublures d'ouvrant de véhicule automobile selon l'invention.
La figure 5 est un diagramme d'un procédé de fabrication d'une doublure d'ouvrant de véhicule automobile selon l'invention.

Dans la description qui suit, le terme « comprendre » est synonyme de « inclure » et n'est pas limitatif en ce qu'il autorise la présence d'autres éléments dans la doublure de renfort, le véhicule automobile ou d'autres étapes dans le procédé de fabrication auquel il se rapporte. Il est entendu que le terme « comprendre » inclut les termes « consister en ». Les termes « externe » et « interne » désigneront respectivement ce qui est orienté vers l'extérieur du véhicule et vers l'intérieur du véhicule.

Dans la présente description, le terme « longitudinal », le terme « longitudinalement », le terme « transversal », et le terme « transversalement » sont employés selon le référentiel du véhicule, dans la configuration de montage. Le terme « longitudinal » correspond à la direction principale de déplacement du véhicule. Le terme « transversal » correspond à une direction perpendiculaire à la direction principale de déplacement du véhicule. Le terme « avant » est en référence au sens principal de déplacement du véhicule. Le terme « arrière » désigne l'opposé de l'avant du véhicule.

L'axe X représente la direction longitudinale, l'axe Y représente la direction transversale, et l'axe Z représente la direction verticale du véhicule automobile. Ces trois axes définissent un trièdre direct dont l'orientation est conservée au travers des figures.

Dans la présente description, les plages de valeurs comprennent les bornes qui les délimitent.

Dans la présente description, les caractéristiques techniques sont définies dans la configuration de montage de la doublure de renfort, à moins que le contraire ne soit mentionné explicitement.

Au travers de la description, les différentes figures utilisent les mêmes signes de référence pour désigner des entités identiques ou similaires.

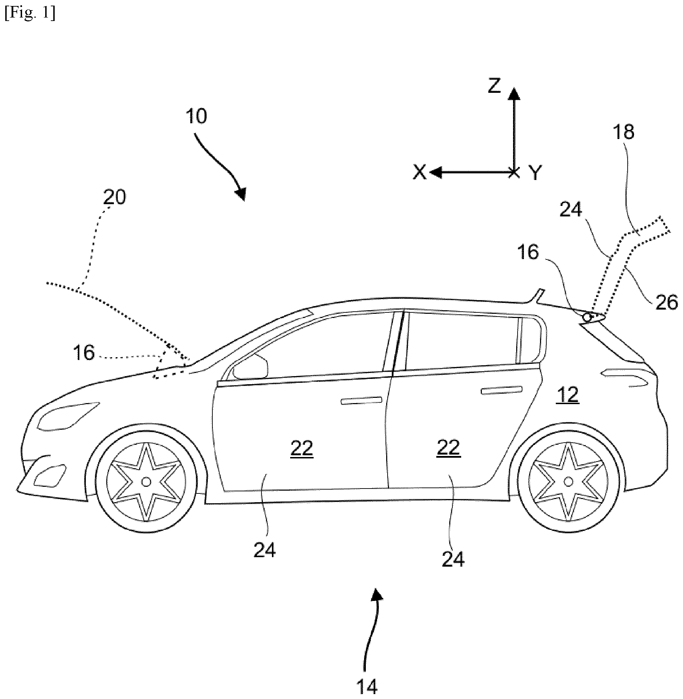

La figure 1 représente un véhicule automobile 10 selon l'invention. Le véhicule automobile 10 comprend des moyens de stockage d'énergie et au moins un moteur (non représenté) adaptés pour entraîner ledit véhicule automobile 10.

Le véhicule automobile 10 comprend une structure 12. La structure 12 forme une caisse extérieure, ou encore une ossature principale du véhicule automobile. Elle est formée d'un assemblage de feuilles métalliques embouties et assemblées par soudure. La structure 12 supporte différents organes du véhicule automobile dont le moteur, les trains roulants et les systèmes de suspension, optionnellement une batterie électrique permettant d'entraîner le véhicule automobile 10 via un moteur d'entraînement.

La structure 12 délimite différents compartiments du véhicule automobile ; dont l'habitacle, un espace de chargement arrière en arrière de l'habitacle et un compartiment avant. L'habitacle reçoit les occupants. Le compartiment avant peut être un compartiment moteur ; ou alternativement un compartiment de chargement.

Le véhicule automobile 10 comprend plusieurs ouvrants 14. Les ouvrants 14 sont montés mobiles par rapport à la structure 12 ; par exemple grâce à des liaisons pivot 16. Les liaisons pivot 16 peuvent être des charnières ou des mécanismes à biellettes. Les ouvrants 14 comprennent un volet de coffre 18, communément appelé hayon arrière. Les ouvrants 14 comprennent également un capot avant 20. Le capot avant 20 donne accès au compartiment avant. Il est monté mobile entre une position ouverte représentée en trait pointillés, et une position fermée représentée en trait plein. Les ouvrants 14 comprennent également des portes latérales 22 permettant un accès à l'habitacle.

Au moins un ou chaque ouvrant 14 comprend une peau extérieure 24 formant l'enveloppe externe du véhicule automobile 10. Il comprend également une doublure de renfort 26. La doublure de renfort 26 rigidifie la peau extérieure 24 qui la masque ; qui l'habille. Une garniture interne peut recouvrir la doublure de renfort 26 si bien que cette dernière est entre la garniture interne et la peau extérieure 24.

Le véhicule automobile peut par exemple être un véhicule automobile particulier ou un véhicule automobile utilitaire.

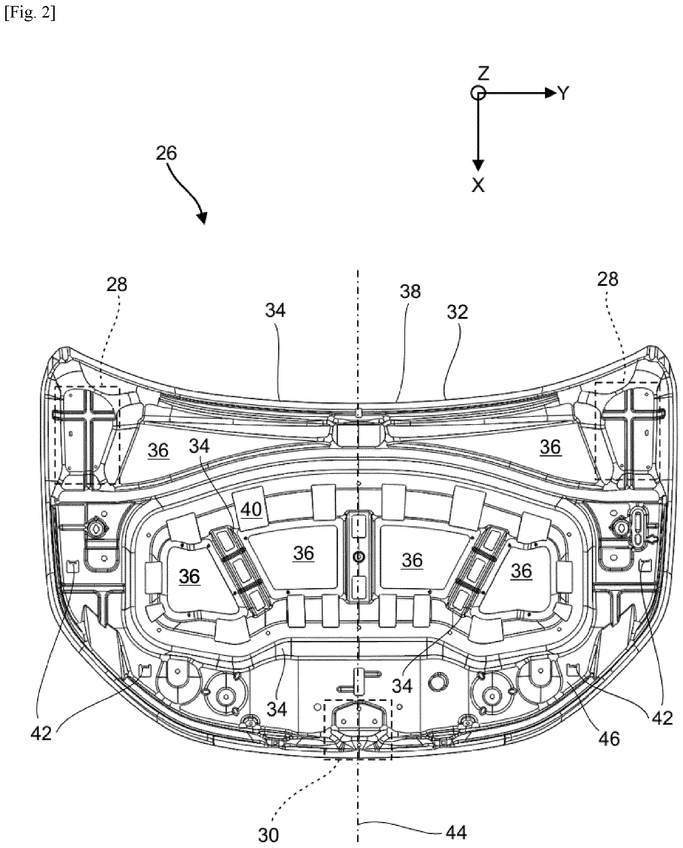

La figure 2 montre du dessous une doublure de renfort 26 de véhicule automobile. Le véhicule automobile peut correspondre à celui présenté en relation avec la figure 1. La peau extérieure n'est pas représentée par soucis de clarté. En l'occurrence, la doublure de renfort 26 est une doublure de renfort de capot avant. Toutefois la présente description s'applique à toute doublure de renfort d'ouvrant du véhicule automobile.

La doublure de renfort 26 présente au moins une première zone de fixation 28 de liaison pivot (non représentée). Les premières zones de fixation 28 peuvent être des zones arrière de fixation, ou encore des zones latérales de fixation. La doublure de renfort 26 présente une deuxième zone de fixation 30 pour un dispositif de verrouillage de l'ouvrant. La deuxième zone de fixation 30 peut être une zone de fixation avant et/ou une zone de fixation centrale.

La doublure de renfort 26 présente une tôle emboutie 32. La tôle emboutie 32 forme un panneau. Elle est monobloc. Elle est venue de matière. Elle peut être une tôle en acier ou en alliage d'aluminium. D'autres métaux sont envisagés afin d'optimiser la rigidité et la masse. La tôle emboutie 32 présente des profilés de rigidification 34, et des ajours 36 permettant de l'alléger. Les profilés de rigidification 34 peuvent présenter un profil en lettre « U » ou en « L ». Ils apportent la raideur à la doublure de renfort 26. Les ajours 36 sont répartis sur la doublure de renfort 26, et par exemple entre les profilés de rigidification 34.

La tôle emboutie 32 comprend un rebord 38. Le rebord 38 peut entourer la doublure de renfort 26. Il peut former un rebord périmétrique. Il faut saillie du côté de la surface inférieure, ou première surface 40 de la doublure de renfort 26. La première surface 40 est opposée à une deuxième surface (non visible) selon l'épaisseur de la doublure de renfort 26. La deuxième surface peut être une surface supérieure. Elle est destinée à recevoir la peau extérieure.

La tôle emboutie 32 comprend au moins, préférentiellement plusieurs pattes de butée droites 42. Les pattes de butée droites 42 font saillie depuis la première surface 40. Elles sont réparties sur le pourtour de la doublure de renfort 26. Elles sont parallèles. Au moins une ou chaque patte de butée droite 42 est distante d'au plus 10 cm du rebord 38, préférentiellement d'au plus 5 cm du rebord 38.

Les pattes de butée droites 42 on une fonction d'écarteur. Elles permettent de maintenir à distance des doublures de renfort 26 (une seule visible) lorsqu'elles sont accolées les unes contre les autres. Cet agencement est utile lors du transport ou du stockage des doublures de renfort 26. En effet, une doublure de renfort 26 est une pièce étendue et mince. Grâce au caractère droit de chaque patte de butée droite 42, l'entretoisement est plus rigide. Ainsi, les pattes de butée droites 42 évitent un encastrement en force des doublures de renfort 26 l'une dans l'autre. La récupération d'une doublure de renfort 26 dans son empilement reste aisé. Le transport et la manutention de chaque doublure de renfort 26 ne nécessite que des efforts liés à sa masse. Le risque de détérioration lors de la manutention reste limité.

La doublure de renfort 26 présente par ailleurs une symétrie. La symétrie est suivant un plan central 44. En l'occurrence, le plan central 44 s'étend verticalement et longitudinalement. Il est un plan géométrique. La symétrie s'applique au rebord 38 et/ou à l'agencement des pattes de butée droites 42. La symétrie peut s'appliquer à l'agencement des profilés de rigidification 34 et à l'agencement des ajours 36. La doublure de renfort 26 est généralement symétrique selon le plan central 44, elle peut présenter des différences concernant certains perçages ou certaines nervures.

La tôle emboutie 32 présente une portion périmétrique 46. La portion périmétrique 46 s'étend vers l'intérieur de la doublure de renfort 26 depuis le rebord 38. La portion périmétrique 46 est généralement plane. Elle est par exemple horizontale dans la configuration d'empilement. Au moins une ou chaque patte de butée droite 42 est agencée dans la portion périmétrique 46. Cet agencement évite le coincement au niveau de la zone de préhension de la doublure de renfort 26.

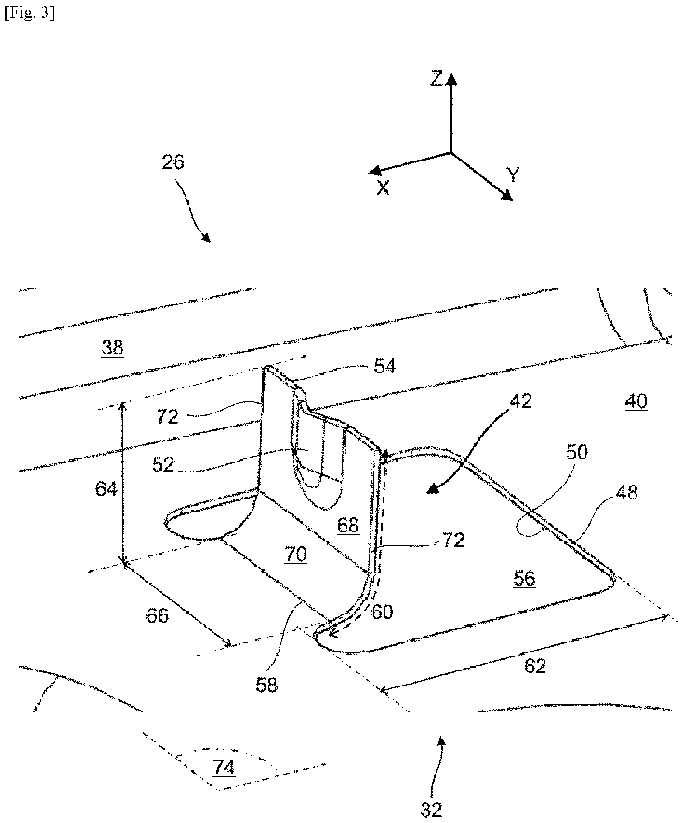

La figure 3 présente une patte de butée droite 42 de doublure de renfort 26 d'ouvrant de véhicule automobile. Le véhicule automobile peut correspondre à celui présenté en relation avec l'une des figures 1 à 2. Le rebord 38 est partiellement représenté en arrière-plan. Bien qu'une seule patte de butée droite 42 ne soit représentées, le présent enseignement s'applique à chaque patte de butée droite 42 de la doublure de renfort 26.

La patte de butée droite 42 forme une équerre s'élevant depuis la première surface 40. La patte de butée droite 42 forme des moyens d'écartement et/ou des moyens d'entretoisement. Elle forme un support de réception d'une autre doublure de renfort qui y est accolée. L'invention apporte un bénéfice pour plusieurs orientations d'empilement : par exemple vertical ou horizontal.

La tôle emboutie 32 présente une épaisseur 48. L'épaisseur 48 est définie entre la première surface 40 et la deuxième surface 50. Elle peut être mesurée au niveau de la portion périmétrique 46 ; ou plus généralement de la zone d'implantation de la patte de butée droite 42. L'épaisseur 48 est comprise entre 0.50 mm et 1.00 mm, préférentiellement entre 0.65 mm et 0.80 mm.

La patte de butée droite 42 comprend un bossage de rigidification 52. Le bossage de rigidification 52 est conformé dans la matière de la patte de butée droite 42. Il forme une protrusion d'un côté, et un creux du côté opposé. Le bossage de rigidification 52 peut être une nervure de rigidification. Le bossage de rigidification 52 s'étend au moins sur 50% de la longueur de la patte de butée droite 42. Le bossage de rigidification 52 améliore la rigidité de la patte de butée droite 42, ce qui soigne le support qu'elle apporte à une doublure de renfort posée au-dessus.

La patte de butée droite 42 comprend un bord libre 54. Le bord libre 54 est à l'opposé de la première surface 40. Le bossage de rigidification 52 est au bord libre 54. Le bord libre 54 délimite le bossage de rigidification 52. Ainsi, la surface de butée disponible, offerte par la patte de butée droite 42 à son sommet augmente. La stabilité du maintien d'une autre doublure de renfort posée contre s'améliore.

La tôle emboutie 32 présente une ouverture 56. L'ouverture 56 est un passage traversant selon l'épaisseur 48. Elle traverse la doublure de renfort 26. Le bossage de rigidification 52 est vers l'opposé de l'ouverture 56. L'ouverture 56 comporte un bord de jonction 58. Le bord de jonction 58 est droit. La patte de butée droite 42 s'étend depuis le bord de jonction 58. L'aire de la patte de butée droite 42 est inférieure ou égale à l'aire de l'ouverture 56.

La patte de butée droite 42 comprend une longueur développée 60. La longueur développée 60 est mesurée du bord libre 54 au le bord de jonction 58 et suit son profil. L'ouverture 56 comprend une deuxième longueur 62 mesurée depuis le bord de jonction 58. La longueur développée 60 représente entre 50% et 100 % de la deuxième longueur 62 ; préférentiellement de 80% à 95% de la deuxième longueur 62. Cet agencement permet de former la patte de butée droite 42 à partir de la matière de l'ouverture 56. Aucun apport de matière n'est nécessaire ; ce qui rationalise la masse et les coûts.

A titre d'exemple, la patte de butée droite 42 présente une distance d'écartement 64 par rapport à la première surface 40 d'au moins 10 mm, préférentiellement d'au moins 15 mm. La distance d'écartement 64 est mesurée perpendiculairement au bord de jonction 58. Elle est d'au plus 30 mm, préférentiellement d'au plus 20 mm. En outre, la patte de butée droite 42 comprend une largeur 66 d'au moins 10 mm. La largeur 66 est mesurée parallèlement au bord de jonction 58 et/ou au bord libre 54. La largeur 66 est comprise entre 10 mm et 25 mm. Par exemple, la largeur 66 est supérieure ou égale à 15 mm. Ces dimensions permettent d'optimiser la rigidité et la compacité.

La patte de butée droite 42 comprend une portion droite 68 et une portion coudée 70 reliant la portion droite 68 à la première surface 40. La portion coudée 70 présente un profil arqué. Elle forme une pliure. La portion droite 68 forme une portion rectiligne généralement perpendiculaire à la première surface 40 et/ou au plan principal 74 de la doublure de renfort 26. Le plan principal 74 peut être suivant l'ouverture 56. Il peut être un plan moyen de la doublure de renfort 26.

La combinaison de la portion coudée 70 et du bossage de rigidification 52 au niveau du bord libre 54 permet un contact ponctuel. En réduisant la surface de contact, le risque de coincement s'amenuise.

Le bossage de rigidification 52 est formé dans la portion droite 68. La patte de butée droite 42 comprend deux bords latéraux droits 72 qui s'étendent perpendiculairement à la première surface 40. La portion droite 68 forme au moins un ou chaque bord latéral droit 72. Le bossage de rigidification 52 est à distance des bords latéraux droits 72 pour préserver la rigidité.

La patte de butée droite 42 est configurée de manière à ce que le bord libre 54 soit en contact d'une portion coudée d'une patte de butée droite d'une doublure de renfort identique (non représentée) lorsque ces doublures de renfort sont superposées et en alignant les pattes de butée droites.

La fonction d'antiblocage est effective même lorsque les doublures de renfort sont décalées l'une par rapport à l'autre, et/ou sensiblement tournées l'une par rapport à l'autre.

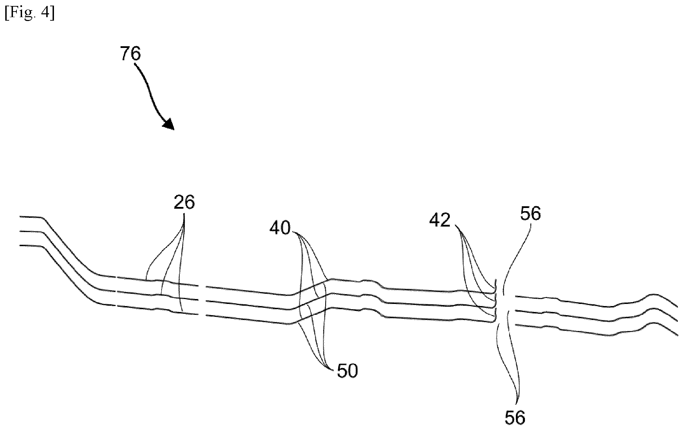

La figure 4 illustre un empilement 76 de doublures de renfort 26 pour ouvrant de véhicule automobile. Le véhicule automobile peut correspondre à celui présenté en relation avec l'une des figures 1 à 3. Par soucis de clarté, seules trois doublures de renfort 26 sont représentées. Toutefois l'empilement peut en comprendre davantage ; par exemple au moins dix ou au moins vingt doublures de renfort 26.

Les doublures de renfort 26 sont superposées l'une sur l'autre. Elles sont agencées selon une même orientation. Les bosses sont mises en correspondance avec les creux des doublures de renfort 26 voisines, ce qui réduit l'épaisseur de l'empilement 76. Dans le présent empilement 76, par exemple pour le transport, les premières surfaces 40 sont en haut, et les deuxièmes surface 50 sont en bas. Des premières surfaces 40 sont en regard de deuxièmes surfaces 50.

Les ouverture 56 sont alignées. Les ouvertures 56 communiquent. Chaque doublure de renfort 26 est configurée de sorte que les pattes de butée droites 42 forment un alignement. Elles sont en appui l'une sur l'autre. Les pattes de butée droites 42 sont parallèles, et éventuellement coplanaires. Ainsi, les doublures de renfort 26 respectent un écartement vertical prédéfini entre chacune d'elles.

On comprend bien que l'invention ajoute au moins un point d'appui entre les doublures de renfort 26. Ainsi, les zones coniques ont moins de risques de s'enfoncer l'une dans l'autre et de se retrouver bloquées. Le risque de coincement est supprimé, même dans un empilement de plusieurs dizaines de doublures de renfort ; et malgré les vibrations pendant le transport.

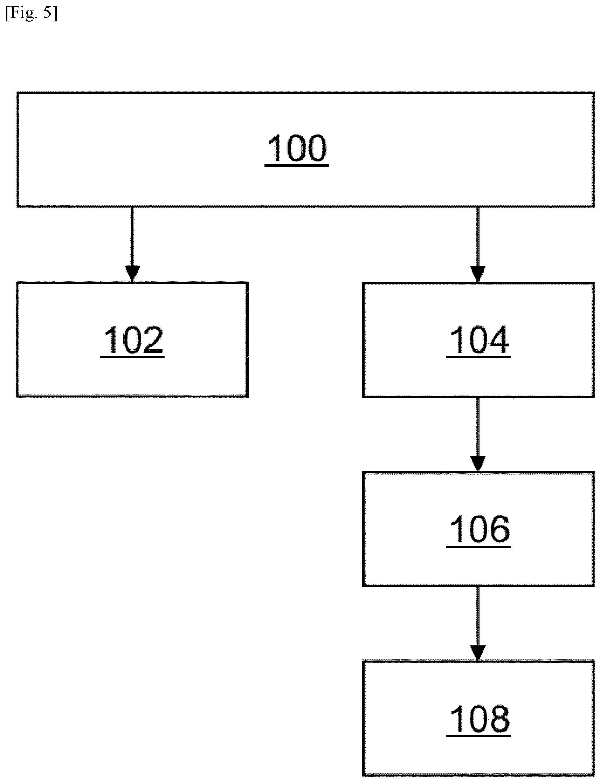

La figure 5 présente un diagramme d'un procédé de fabrication d'une doublure de renfort d'ouvrant de véhicule automobile. Le véhicule automobile peut correspondre à celui présenté en relation avec l'une des figures 1 à 4.

Le procédé de fabrication comprend les étapes suivantes, notamment exécutées dans l'ordre qui suit :
fourniture 100 d'un flan de tôle ;
emboutissage 102 du flan de tôle de sorte à former une ébauche de doublure de renfort ;
découpe 104 d'une languette droite dans l'ébauche de doublure de renfort ;
formation 106 d'un bossage de rigidification dans la languette droite ;
pliage 108 de la languette droite d'un quart de tour de sorte à former une patte de butée droite.

A l'étape de fourniture 100, un flan de tôle plan présentant un périmètre proche de la doublure de renfort est fourni. Ce flan de tôle présente des surlargeurs pour le maintenir pendant les étapes se mise en forme ultérieures.

A l'étape d'emboutissage 102, le flan de tôle est conformé afin de réaliser progressivement la doublure de renfort. Les profilés de rigidification y sont conformés par une presse hydraulique. Les ajours y sont percés.

A l'étape de découpe 104, la languette droite est délimitée. Elle est formée grâce à une découpe en forme de la lettre « U ». La languette droite forme le précurseur de la patte de butée droite. Leurs surfaces correspondent en développé. L'étape de découpe 104 comprend un enlèvement de matière, ce qui contribue à alléger la doublure de renfort.

A l'étape de formation 106, le bossage de rigidification s'éloigne du niveau de l'ouverture. L'étape de formation 106 d'un bossage de rigidification est optionnelle. La patte de butée droite, notamment sa portion droite, peut rester intégralement plane.

A l'étape de pliage 108, la languette droite prend une orientation transversale par rapport à l'ouverture. Elle devient perpendiculaire par rapport à la première surface. Elle est pliée à 90° par rapport à sa position initiale. La portion droite reste droite. La portion coudée s'arque.

Les étapes de découpe 104, de formation 106 et de pliage 108 peuvent être effectuée en même temps que l'étape d'emboutissage 102. L'étape de découpe 104 peut être effectuée en même temps que la découpe des ajours. L'étape de formation 106 du bossage peut être effectuée pendant la formation des profilés de rigidification. L'étape de pliage 108 peut être réalisée pendant la création de poches ou de creux.

Certaines étapes peuvent être combinées dans une phase de descente de presse hydraulique.

Selon une alternative, les étapes de découpe, de formation et de pliage peuvent être effectuée après l'étape d'emboutissage.

L'invention comprend la combinaison de tous les modes de réalisation présentés par toutes les figures.

Les figures 2 à 4 sont des vues isométriques. Elles respectent chacune une échelle spécifique.

## Revendications

1. Doublure de renfort (26) d'ouvrant (14) de véhicule automobile (10), ladite doublure de renfort (26) comprenant une tôle emboutie (32) avec une épaisseur (48), une première surface (40) et une deuxième surface (50) opposée à la première surface (40) suivant l'épaisseur (48), la deuxième surface (50) étant destinée à recevoir une peau extérieure (24) d'ouvrant (14) ; **caractérisée en ce que** la tôle emboutie (32) comprend une patte de butée droite (42) s'étendant perpendiculairement à la première surface (40) afin de maintenir à distance une doublure d'ouvrant identique empilée contre sa première surface (40).

2. Doublure de renfort (26) selon la revendication 1, **caractérisée en ce que** la patte de butée droite (42) comprend un bossage de rigidification (52), préférentiellement le bossage de rigidification (52) s'étend au moins sur 50% de la patte de butée droite (42).

3. Doublure de renfort (26) selon la revendication 2, **caractérisée en ce que** la patte de butée droite (42) comprend un bord libre (54) à l'opposé de la première surface (40), le bossage de rigidification (52) étant audit bord libre (54).

4. Doublure de renfort (26) selon l'une des revendications 1 à 3, **caractérisée en ce que** la tôle emboutie (32) comprend une ouverture (56) avec un bord de jonction (58), la patte de butée droite (42) s'étendant depuis le bord de jonction (58).

5. Doublure de renfort (26) selon la revendication 4, **caractérisée en ce que** la patte de butée droite (42) comprend une longueur développée (60) mesurée depuis le bord de jonction (58), et l'ouverture (56) comprend une deuxième longueur (62) mesurée depuis le bord de jonction (58), la longueur développée (60) représentant entre 50% et 100 % de la deuxième longueur (62) ; préférentiellement de 80% à 95% de la deuxième longueur (62).

6. Doublure de renfort (26) selon l'une des revendications 1 à 5, **caractérisée en ce que** la patte de butée droite (42) comprend une portion droite (68) et une portion coudée (70) reliant la portion droite (68) à la première surface (40) ; préférentiellement la doublure de renfort d'ouvrant (14) présente une symétrie suivant un plan central (44).

7. Doublure de renfort (26) selon l'une des revendications 1 à 6, **caractérisée en ce que** la patte de butée droite (42) présente une distance d'écartement (64) par rapport à la première surface (40) d'au moins 10 mm, préférentiellement d'au moins 15 mm, préférentiellement la patte de butée droite (42) comprend une largeur (66) d'au moins 10 mm.

8. Doublure de renfort (26) selon l'une des revendications 1 à 7, **caractérisée en ce que** la tôle emboutie (32) comprend une portion périmétrique (46), la patte de butée droite (42) est une première patte, la tôle emboutie (32) comprenant au moins une, préférentiellement au moins trois autres pattes de butée droites et identiques à la première patte et réparties sur la portion périmétrique (46) de la tôle emboutie (32).

9. Véhicule automobile (10) comprenant un ouvrant (14) avec une doublure de renfort (26) et une peau extérieure (24) supportée par la doublure de renfort (26), **caractérisé en ce que** la doublure de renfort (26) est conforme à l'une des revendications 1 à 8, préférentiellement l'ouvrant est un capot avant (20).

10. Procédé de fabrication d'une doublure de renfort (26) d'ouvrant (14) de véhicule automobile (10), le procédé comprenant les étapes suivantes :
suivantes :
• fourniture (100) d'un flan de tôle ;
• emboutissage (102) du flan de tôle de sorte à former une ébauche de doublure de renfort ; **caractérisé en ce que** le procédé comprend les étapes suivantes :
• découpe (104) d'une languette droite dans l'ébauche de doublure de renfort (26) ; puis
• formation (106) d'un bossage de rigidification (52) dans la languette droite ; puis
• pliage (108) de la languette droite d'un quart de tour de sorte à former une patte de butée droite (42).
